# EUROPEAN PATENT APPLICATION

(11) **EP 3 819 163 A1**
(43) Date of publication of application: **12.05.2021**
(21) Application number: 20205112.4
(22) Date of filing: 02.11.2020
(51) Int. Cl.: B60N 2/24

(54) **A FOLDABLE AUXILIARY SEAT, TO MAKE IT EASIER FOR A DISABLED PERSON TO GET ON BOARD A MOTOR-VEHICLE**

(30) Priority: 05.11.2019 IT 201900020402
(71) Applicant: Kivi S.r.l., 14040 Vigliano d'Asti (Asti) (IT)
(72) Inventor: GIBERTI, Mr Giancarlo, I-14040 Vigliano d'Asti (Asti) (IT)
(74) Representative: Notaro, Giancarlo

(57) **Abstract**

An auxiliary foldable seat, to make it easier for a disabled person to get on board a motor-vehicle, comprises a stationary support structure (6), intended to be attached to the side of a motor-vehicle seat (1). An auxiliary seat body (7) is pivotally mounted to the stationary support structure (6), and is movable between a substantially horizontal operative raised position and a substantially vertical inoperative lowered position. To support the body (7) of the auxiliary seat in its raised operative position, a support arm (8) is provided, which has an upper end (80) articulated to the body (7) of the auxiliary seat, and a lower end (81) carrying an engagement element (86) arranged within a guide groove (662) formed in the stationary support structure (6). The guide groove (662) is configured in such a way that in the horizontal position of the auxiliary seat body (7), the engagement element (86) carried by the lower end of said support arm (8) is received and supported in a side receptacle (662B) of said guide groove (662). Raising the auxiliary seat body (7) beyond the horizontal operative position causes the engagement element (86) of the support arm to leave the guide groove (662).

## Description

The present invention relates to foldable auxiliary seats used to make it easier for a disabled person to get on board a motor-vehicle In particular, the invention relates to a foldable auxiliary seat of the known type comprising:
- a stationary support structure, intended to be attached to the side of a motor-vehicle seat on a support structure of the motor-vehicle seat,
- an auxiliary seat body, pivotally mounted to said stationary support structure around a hinge axis which, in the condition of use, is arranged in the horizontal longitudinal direction of the motor-vehicle, in such a way that said auxiliary seat body is movable between a substantially horizontal operative raised position and an inoperative, substantially vertical, lowered position, and
- at least one support arm, which is operatively associated with the body of the auxiliary seat, to support the body of the auxiliary seat in its raised operative position.

An auxiliary foldable seat having the characteristics indicated above is, for example, described and illustrated in document US 6,129,403 A. However, this known solution is not sufficiently reliable and safe in operation.

A foldable auxiliary seat of the type indicated above is also known from US 6 039 402 A.

The object of the present invention is to provide an auxiliary foldable seat of the type indicated above, which is capable of simultaneously and optimally satisfying a plurality of different needs. First of all, it is necessary that the auxiliary seat, once installed on the motor-vehicle, guarantees total stability and safety during its condition of use. Secondly, it is necessary that the auxiliary seat can be moved between its vertical inoperative position and its horizontal operative position with extremely simple and rapid operations. Furthermore, it is necessary that the seat can be adapted and/or adjusted with equally simple and rapid operations according to the characteristics of the motor-vehicle on which it is applied. Finally, it is also desirable that the auxiliary seat has a relatively simple and low-cost structure.

In view of optimally satisfying all the aforesaid needs, the invention relates to an adjustable auxiliary seat having all the characteristics indicated in claim 1.

Thanks to these characteristics, the auxiliary seat according to the invention ensures stability and safety in its condition of use and - at the same time - can be moved from its vertical inoperative position to its horizontal operative position, and from its horizontal operative position to its vertical inoperative position, with extremely simple and quick operations

In a preferred embodiment, the aforesaid guide groove has an open side inlet on said front surface of the stationary structure, configured in such a way that when the auxiliary seat body is raised beyond its horizontal operative position to cause said engagement element to leave the guide groove, a subsequent lowering of the auxiliary seat body causes sliding of the engagement element above the front surface of the stationary structure until it is reinserted, due to the bias of the aforesaid spring, into the guide groove, through said inlet of the guide groove, the further lowering of the auxiliary seat body continuing with the engagement element, which slides inside the guide groove until reaching the vertical lowered position of the auxiliary seat body.

According to an additional preferred characteristic, the aforesaid outlet of the guide groove is at least partially obstructed by a free end of an elastic leaf anchored to the stationary structure, in such a way that when said engagement element leaves the guide groove through said outlet it causes the bending deformation of the elastic leaf, while when the engagement element slides on said front surface during the lowering of the body of the auxiliary seat towards the vertical resting position, this engagement element slides over said leaf, which - in the meantime - has returned to its undeformed position, so as not to fall back into said outlet.

According to a further preferred characteristic, the aforesaid spring is arranged in such a way that, in a last tract of the lowering stroke of the seat towards its vertical resting position, it tends to draw the seat body towards that position.

In the preferred embodiment, the stationary structure comprises two parallel and spaced apart uprights, directed vertically in the condition of use, and said pivoted arm comprises a total of two engagement elements protruding laterally from the lower end of the support arm and engaged in two respective guide grooves, which are formed in facing side surfaces of said uprights, each groove having a respective receptacle to support the respective engagement element in the horizontal operative position of the auxiliary seat body, and in that the front surfaces of said uprights each have said outlet and said inlet of the respective guide groove.

An additional characteristic of the invention resides in the fact that the auxiliary seat body is hinged to the stationary structure by means of a hinge device including at least one hinge pin, which is freely removable from a hole of a cooperating hinge element, by a movement of the auxiliary seat body in the direction of the axis of said pin.

Thanks to the aforesaid characteristics, the auxiliary seat according to the invention allows a series of important advantages to be obtained. Firstly, when the body of the auxiliary seat is carried from its vertical resting position to its horizontal operative position, it is supported in a safe and reliable manner by the aforesaid support arm, by means of the support of one or more engagement elements received in receptacles of the respective guide grooves. Secondly, the operation necessary to move the body of the auxiliary seat from its vertical resting position to its horizontal operative position can be performed by the user in a simple and rapid manner, even with one hand, simply by lifting the body of the seat up to its horizontal position, in which the aforesaid spring recalls each engagement element into the respective receptacle of the respective guide groove. The operation with which the user returns the body of the auxiliary seat into the lowered vertical position can also be simple and quick. In fact, it is simply necessary to slightly raise the body of the auxiliary seat beyond its horizontal operative position, so as to obtain the exit of each engagement element from the respective guide groove, after which the body of the auxiliary seat can be simply lowered, causing the sliding of each engagement element above the aforesaid front surface of the stationary structure, until the engagement element is re-inserted into the guide groove, once it reaches the aforesaid inlet of the groove. The final part of the movement of the auxiliary seat body towards its lowered vertical position is also assisted by the spring which, in the final portion of this movement, exerts an action tending to bias the seat towards the vertical position. Another important advantage of the invention lies in the fact that the structure of the auxiliary seat described above is extremely simple and consequently inexpensive.

Of course, the possibility of providing a motorization of the movement of the auxiliary seat body is also not excluded.

Finally, as indicated above, preferably the body of the auxiliary seat is pivoted to the stationary structure by means of hinge pin, which can be freely removed in the axial direction from the holes of the hinge elements cooperating with them, which allows the entire body of the seat to be removed and reassembled with an extremely simple and quick operation.

Further characteristics and advantages of the invention will become apparent from the description that follows with reference to the attached drawings, provided purely by way of non-limiting example, wherein:
- Figure 1 is a perspective view of the auxiliary seat according to the invention in its operative condition, next to a motor-vehicle seat,
- Figure 2 is a perspective view of the auxiliary seat of Figure 1, in its inoperative lowered condition,
- Figure 3 is an exploded perspective view of a preferred embodiment of the auxiliary seat according to the invention,
- Figures 4-7 are views in the direction indicated by the arrow IV of Figure 1 of the auxiliary seat according to the invention in different operating conditions, and
- Figures 8 and 9 are two front views of the auxiliary seat according to the invention, which illustrate the body of the auxiliary seat in an assembled condition and in a disassembled condition, with the hinge pins removed from the holes of the respective hinge elements.

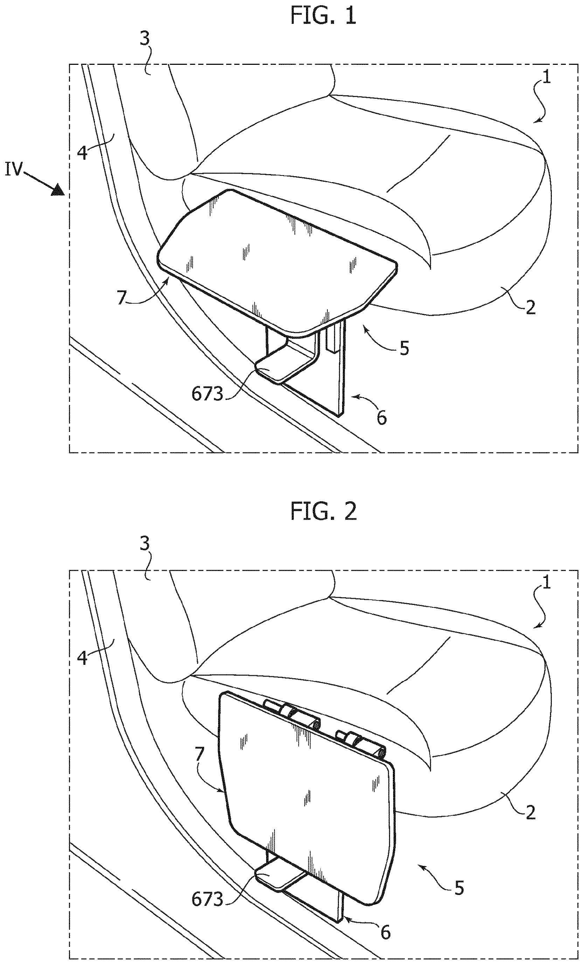

In Figures 1 and 2, the reference number 1 indicates a front seat of a motor-vehicle, comprising a cushion 2 and a backrest 3. For greater simplicity of illustration, Figures 1 and 2 do not show the structure attached to the motor-vehicle platform and bearing the seat 1. This support structure of the seat typically comprises devices for adjusting the position of the seat, including, in particular, guides for adjusting the longitudinal position of the seat, and/or one or more devices for adjusting the position in height and/or inclination of the seat cushion. In Figures 1,2, the side door of the motor-vehicle has been removed. The reference number 4 indicates the edge of the doorway, through which a passenger or the driver can access the seat 1. Reference 5 indicates - in its entirety - a preferred embodiment of the auxiliary seat according to the invention, which includes a stationary structure 6 that is secured to the support structure of the seat 1 (for example, directly to the platform of the motor-vehicle or, more preferably, to the support structure of the seat, which is adjustable in position relative to the floor). The auxiliary seat 5 also comprises an auxiliary seat body 7, which is hinged to the stationary structure 6 around an axis parallel to the longitudinal direction of the motor-vehicle, which is movable between a substantially vertical, lowered resting position (Figure 2), and a substantially horizontal raised operative position (Figure 1).

In the horizontal operative position of Figure 1, the body of the auxiliary seat 7 constitutes an ideal extension of the seat surface of the motor-vehicle seat, on the outer side thereof, which makes it easier for a disabled person to get on board a motor-vehicle, for example, when transferring from a wheelchair to the seat of the motor-vehicle.

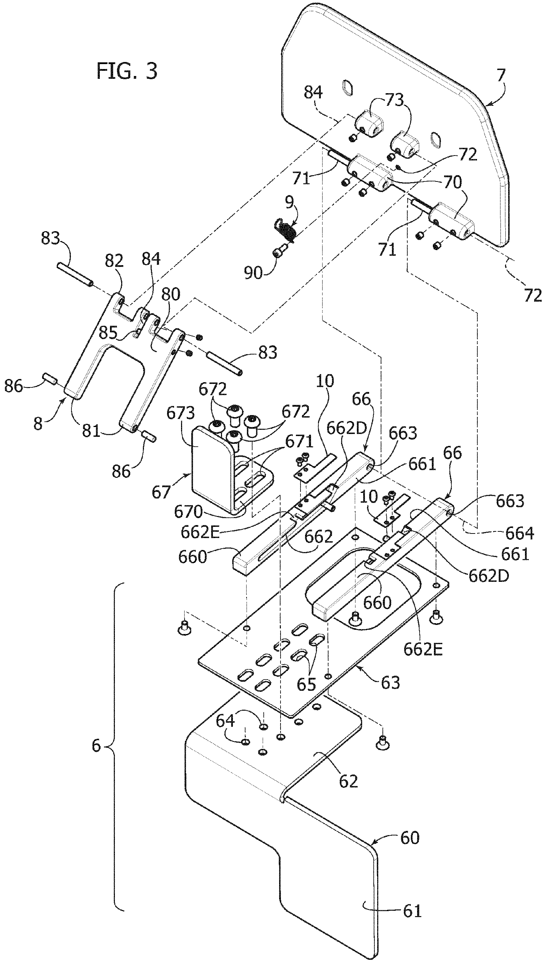

Figure 3 illustrates an exploded perspective view of a preferred embodiment of the auxiliary seat according to the invention. In the illustrated case, the stationary support structure 6 includes a base plate 60, which is attached to the platform of the motor-vehicle or to a support structure of the seat 1. The base plate 60 is illustrated in Figure 3 in a position not corresponding to that of use. The base plate 60, in fact, comprises a first flat portion 61 which, during use, is intended to be arranged horizontally, and a second flat portion 62, perpendicular to the portion 61, which, during use, is intended to be arranged vertically, alongside the seat of the motor-vehicle. The stationary structure 6 also comprises a second plate 63 which, during use, is intended to be arranged vertically, secured in contact with the portion 62 of the base plate 60. The rigid connection between the plates 62,63 is obtained by means of screws that engage holes 64 of the portion 62, and slots 65, vertically elongated, of the plate 63, in such a way that the vertical position of the plate 63 is adjustable with respect to the portion 62 of the base plate 60.

The stationary structure 6 also comprises two uprights 66, parallel to each other and spaced apart, which are screwed to the plate 63 and which, in the condition of use, are directed vertically.

The two vertical uprights 66 of the stationary structure 6 have two respective front surfaces 660 and two side surfaces 661, facing each other, only one of which is visible in Figure 3.

Two guide grooves 662 (only one of which is visible in Figure 3) are formed in the facing side surfaces 661 of the two uprights 66, the function of which will be illustrated below.

The stationary structure 6 finally comprises a square plate 67, having a vertical portion with vertically elongated slots 671, for engaging fastening screws 672, which are engageable through the slots 671 and 65, as well as through the holes 64, to secure together the plate 67, the plate 63 and the portion 62 of the plate 60.

The square plate 67 comprises a portion 673 perpendicular to the portion 670 (see also Figures 1,2), which is configured to rest on the lower edge of the doorway 4, in order to constitute a further safety support for the auxiliary seat according to the invention.

Again with reference to Figure 3, the body 7 of the auxiliary seat is constituted by a flat-shaped plate, the lower surface of which is attached to bodies 70 from which two hinge pins 71 protrude, aligned according to an axis 72 adjacent to a rear edge of the body 7 of the auxiliary seat. The body 7 of the auxiliary seat is hinged to the stationary structure 6 by engaging the two pins 71 in respective holes 663 formed through the upper ends of the two uprights 660, and aligned along an axis 664, which - in the condition of use - is parallel to the longitudinal direction of the motor-vehicle.

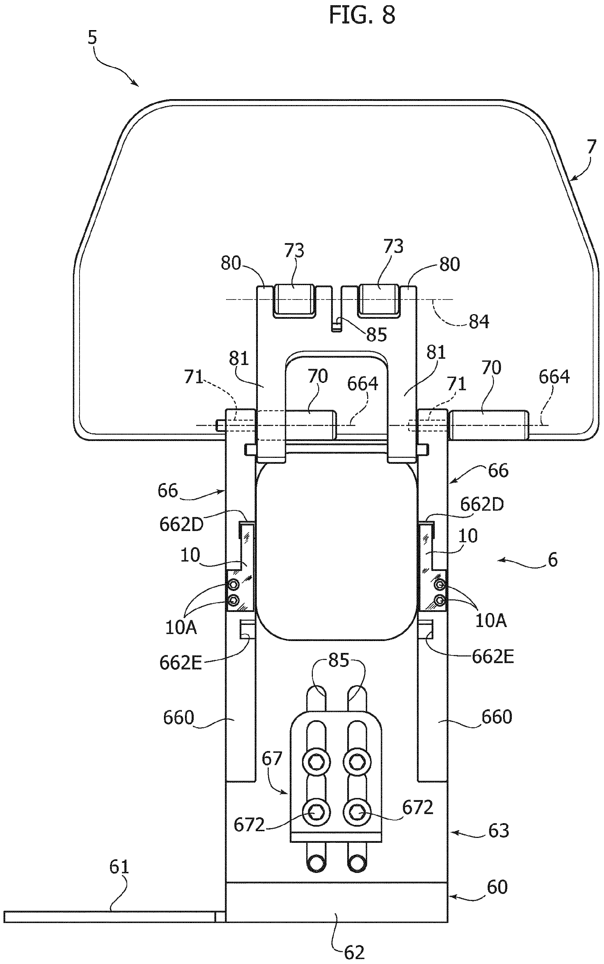

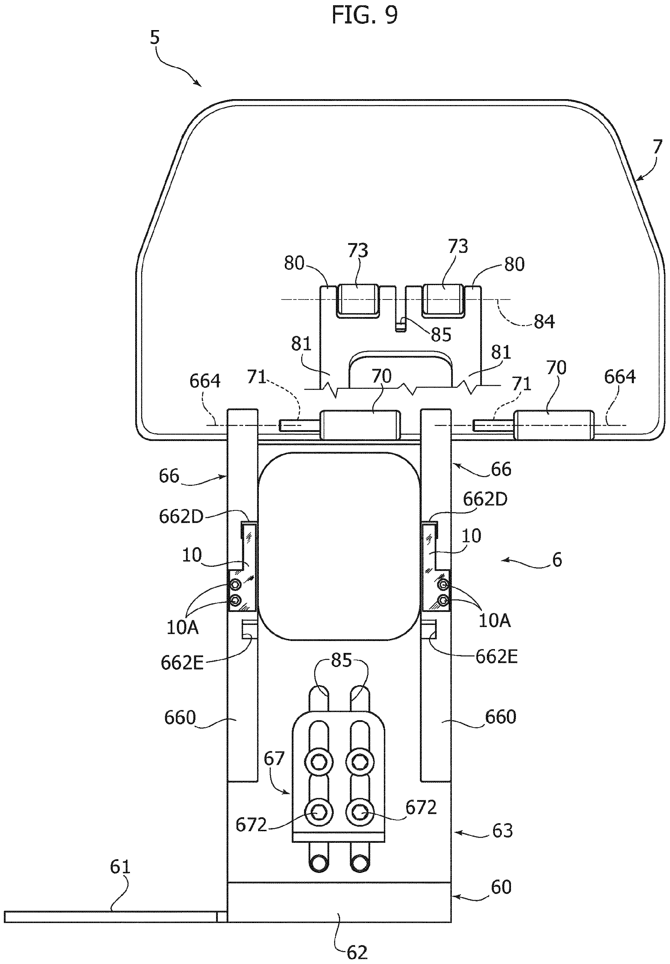

The two pins 71 can be engaged and disengaged freely within the respective holes 663 by means of a movement of the seat body 7 with respect to the uprights 66 in the direction of the axis 664. This possibility is also evident from Figures 8,9, which illustrate the body 7 of the auxiliary seat, respectively, in the condition hinged to the stationary structure 6, with the pins 71 engaged within the respective holes 663, and in a disassembled condition, with the pins 71 removed from the respective holes.

The structure of the auxiliary seat according to the invention also comprises a support arm 8, which - in the illustrated example - has a configuration including an upper end head 80, and two arm portions 81 parallel to each other and spaced apart, protruding from the end head 80.

The end head 80, again in the specific example illustrated, is configured in such a way as to define two fork portions 82, which are hinged to two bodies 73 attached to the lower surface of the body 7 of the auxiliary seat, by means of articulation pins 83, which define an articulation axis 84 (see Figures 8, 9) parallel and spaced apart from the hinging axis of the body 7 of the auxiliary seat on the stationary structure 6. In this way, the support arm 8 is articulated to the body 7 of the auxiliary seat.

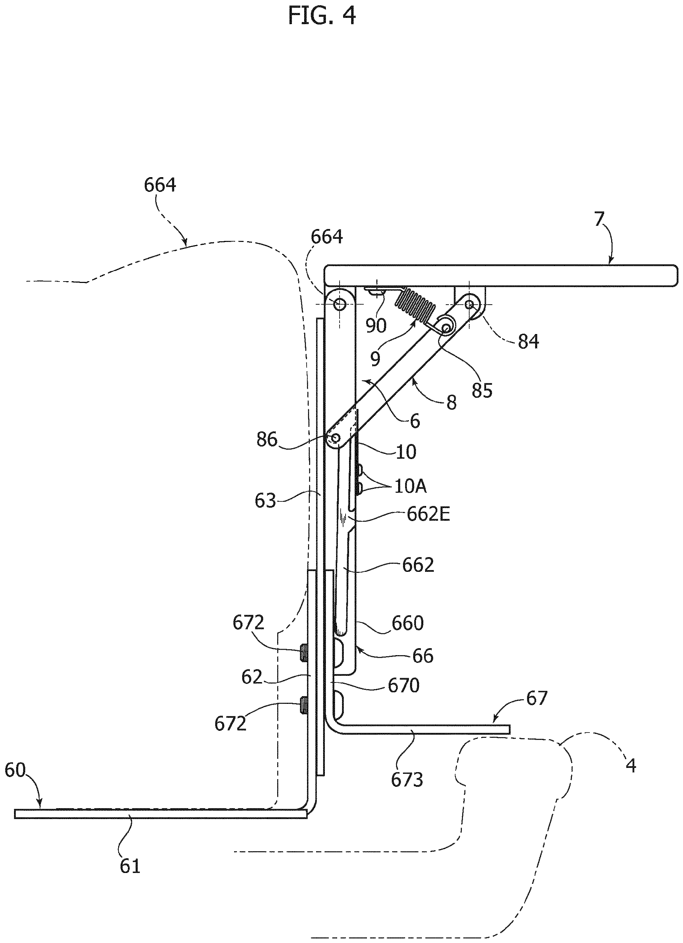

Between the two fork portions 82 of the upper head 80 of the support arm 8, there is an interstice 84, within which a pin 85 is fixed for attaching one end of a helical spring 9 (see also Figure 4). The opposite end of the spring 9 is attached by means of a screw 90 (Figures 3, 4) to the lower surface of the body 7 of the auxiliary seat (which has a hole 72 within which the screw 90 is engaged).

The arrangement of the spring 9 is such that it tends to draw the support arm 8 towards a position rotated around its hinging axis 84, towards the lower surface of the body 7 of the auxiliary seat. In particular, with reference to Figure 4, the spring 9 tends to rotate the support arm 8 around its hinging axis 84 in a clockwise direction (with reference to Figure 4).

Again, with reference to Figure 3, the lower end of the support arm 8, in the case of the preferred embodiment illustrated here, is constituted by the ends of the two arm portions 81. Two cylindrical pins 86 protrude from these ends, which constitute engagement elements received within the guide grooves 662 formed in the facing side surfaces 661 of the two uprights 66 of the stationary structure.

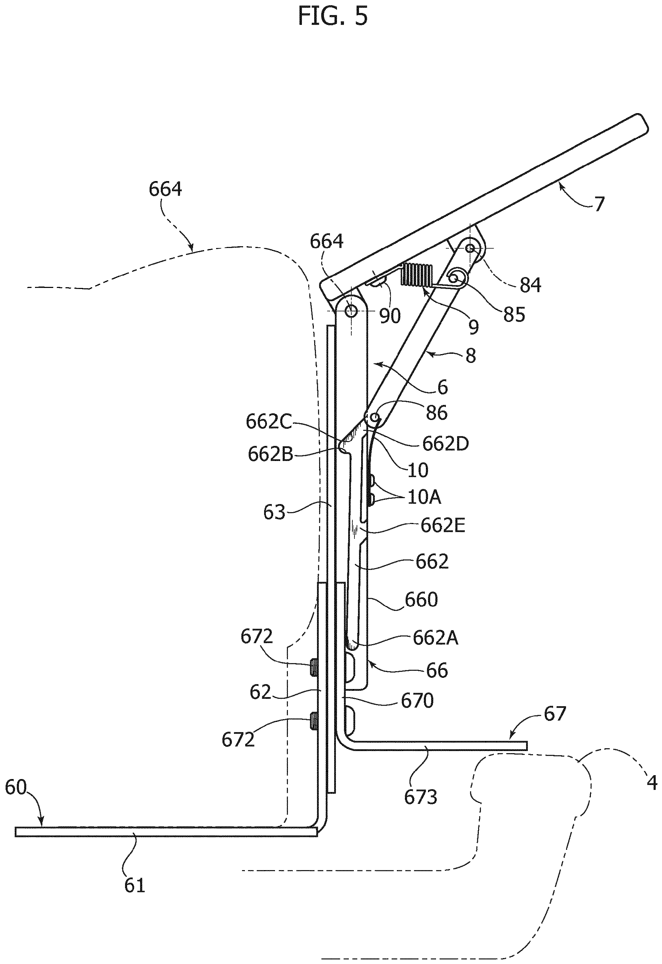

The configuration of each of the guide grooves 662 is clearly visible, for example, in Figure 5, which illustrates the engagement element 86 carried by each of the arm portions 81 of the support arm 8, which is intended to cooperate with the guide groove 662.

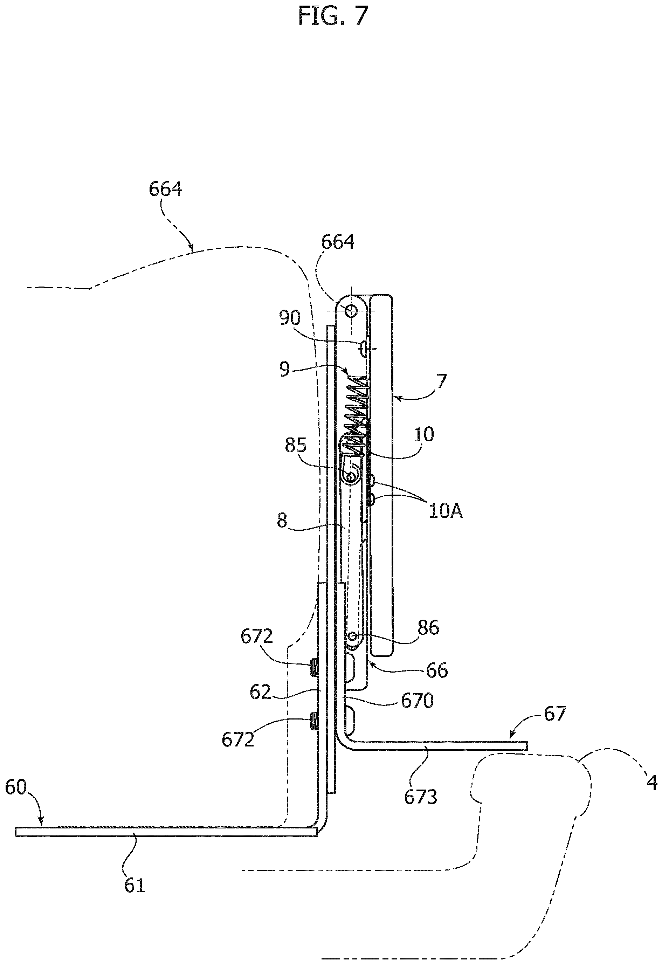

As visible in Figure 5, in the condition of use, the groove 662 is directed vertically and has a lower end 662A (see Figure 5) which receives the engagement element 86 when the auxiliary seat body 7 is in its lowered vertical position (visible in Figure 7).

Starting from the lowered vertical condition of Figure 7, the user can lift the seat body 7 by rotating it around its hinge axis 664. Following this rotation, each engagement element 86 slides upwards inside the guide groove 662 until it reaches the upper end of the groove 662 where this groove has a side receptacle 662B (arranged on the side of the groove 662 facing the seat 1 of the motor-vehicle). The receptacle 662B is clearly visible in Figure 5. While lifting the body 7 of the auxiliary seat, when this seat reaches the horizontal operative position (illustrated in Figure 4), the support arm 8 is in a position wherein each engagement element 86 is free to click into the receptacle 662B, due to the bias of the spring 9. In this condition, the body 7 of the auxiliary seat is stably supported in its position by means of the support arm 8 and the two engagement elements 86 on the horizontal walls of the two receptacles 662B.

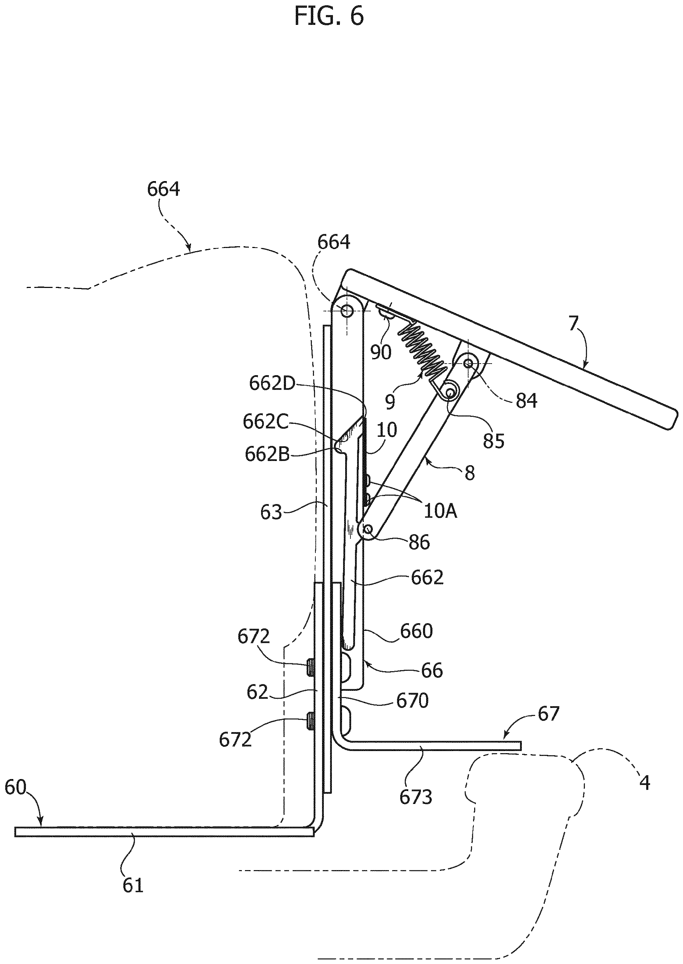

Again with reference to Figure 5, each receptacle 662B communicates by means of an upwardly inclined passage 662C, formed at the upper end of the guide groove 662, and opening onto the front surface 660 of the respective upright 66 at an outlet 662D (clearly visible in Figure 6).

Also clearly visible in Figure 6, the outlet 662D opening onto the front surface 660 of each upright 66 is at least partially obstructed by the free end of a metal elastic leaf 10. The free end of the elastic leaf 10 protrudes upwards from a root portion anchored by screws 10A to the front surface of the respective upright 66.

If, starting from the horizontal operative position of the body 7 of the auxiliary seat, which is illustrated in Figure 4, the body 7 is raised above this horizontal position, as illustrated in Figure 5, each of the engagement elements 86 is forced to slide into the inclined passage 662C until leaving the guide groove 662, through the outlet 662D (Figure 6), also causing the elastic deformation of the leaf 10 (Figure 5). By slightly raising the body 7 of the auxiliary seat upwards with respect to the position illustrated in Figure 5, each engagement element 86 remains engaged above the front surface 660 of the respective upright 66, while the respective metal leaf 10 returns to its undeformed condition. Starting from this condition, if the body 7 is lowered again by making it rotate around its hinge axis 664 (clockwise with reference to Figure 5), each engagement element 86 is maintained by the recall action of the spring 9 in engagement with the respective front surface 660, and can slide downwards above the surface 660, until it "falls" inside the guide groove 662, through an inlet 662E open at the front surface 660, again due to the recall action of the spring 9. Figure 6 shows the step wherein the engagement element 86 enters the inlet 662E following the lowering movement of the body 7 of the auxiliary seat. Once each engagement element 86 has re-entered the guide groove 662, the further lowering of the body 7 causes each engagement element 86 of the respective groove 662 to slide downwards, until the lowered vertical position of the body 7 is reached (Figure 7), where each engagement element 86 is located in proximity to the lower end of the respective groove 662.

As can be seen, therefore, during operation, the body 7 of the auxiliary seat can be carried from the vertical lowered position illustrated in Figure 7 to the horizontal raised position illustrated in Figure 4, by rotating the body 7 upwards until the position illustrated in Figure 4 is reached, at which the support arm 8 clicks into the position wherein the engagement elements 86 rest on the respective receptacles 662B, thereby safely and reliably supporting the seat 7 and the weight of the user when s/he rests on the seat. To return the body 7 of the auxiliary seat to its lowered position, it is sufficient to raise the body 7 of the auxiliary seat above its horizontal position, so as to disengage the elements 86 from their respective guide grooves (Figure 5), after which it is sufficient to lower the body 7 of the auxiliary seat again in the direction of its vertical position. In a first step of moving the body 7 downwards, the engagement elements 86 slide over the elastic leaf 10 and over the front surface of the two uprights 66, until they fall into the respective guide grooves 662 through the inlets 662E, after which, in a second step of the lowering movement, the engagement elements 86 slide again inside the guide grooves 662, until they reach the lower ends of the grooves, at the vertical position of the body 7 of the auxiliary seat.

The arrangement of the ends of the spring 9 anchored, respectively, to the body 7 and to the support arm 8, with respect to the position of the articulation axis 664, is such that in the final step of lowering the body 7 towards its vertical resting position, the spring 9 encourages this movement.

As is evident from the above, the auxiliary seat according to the present invention, in addition to ensuring a reliable and safe support of the seat body in its operative position, also allows the auxiliary seat body to be moved between its resting position and its operative position with extremely simple and rapid operations. The functionality of the device is further increased by the fact that it is possible to disassemble and reassemble the seat body 7 by extracting the hinge pins 71 from the respective hinge holes (Figures 8, 9).

Finally, all the above advantages are obtained with a very simple and low cost structure.

Of course, without prejudice to the principle of the invention, the details of construction and the embodiments may vary widely with respect to those described and illustrated purely by way of example, without departing from the scope of the present invention.

## Claims

1. A foldable auxiliary seat, to make it easier for a disabled person to get on board a motor-vehicle, including:
- a stationary support structure (6), intended to be attached to the side of a motor-vehicle seat (1) on a support structure of the motor-vehicle seat (1),
- an auxiliary seat body (7), pivotally mounted to said stationary support structure (6) around a hinge axis (664) which, in the condition of use, is arranged in the horizontal longitudinal direction of the motor-vehicle, in such a way that said auxiliary seat body (7) is movable between a substantially horizontal operative raised position and an inoperative, substantially vertical, lowered position, and
- at least one support arm (8), which is operatively associated with the body (7) of the auxiliary seat, to support the body (7) of the auxiliary seat in its raised operative position,
- wherein:
- the support arm (8) has an upper end (80) pivotally connected to said body (7) of the auxiliary seat around an axis (84) parallel to, and spaced apart from, the hinge axis (664) of the body of the auxiliary seat (7), and a lower end (81) carrying an engagement element (86) arranged within a guide groove (662) formed in the stationary support structure (6), and extending substantially vertically in the condition of use,
- said guide groove (662) is configured in such a way that in the horizontal position of the auxiliary seat body (7), the engagement element (86) carried by the lower end of said support arm (8) is received and supported in a side receptacle (662B) of said guide groove (662),
- between the auxiliary seat body (7) and the support arm (8) pivoted thereto, at least one spring (9) is interposed tending to bias the support arm (8) towards the lower surface of the auxiliary seat body (7), in such a way that when the auxiliary seat body (7) is lifted from the aforesaid inoperative vertical position to the horizontal operative position, said spring (9) moves the support arm (8) to a position wherein said engagement element (86) of the support arm is received in said side receptacle (662B) of the guide groove (662), so that the auxiliary seat body (7) remains firmly supported in the aforesaid horizontal position.
wherein said receptacle (662B) is arranged on one side of the guide groove (662) and communicates through an inclined passage (662C) with an outlet (662D) arranged on the opposite side of said guide groove (662) with respect to said receptacle (662B), and opening onto a front surface (660) of said stationary structure (6), in such a way that lifting of the auxiliary seat body (7) beyond the operative horizontal position causes the engagement element (86) of the support arm to leave the guide groove (662).

2. An auxiliary seat according to claim 1, **characterized in that** said guide groove (662) has a side inlet (662E) opening onto said front surface (660) of the stationary structure (6), and configured in such a way that when the auxiliary seat body (7) is raised beyond its horizontal operative position to cause said engagement element (86) to leave the guide groove (662), a subsequent lowering of the auxiliary seat body (7) causes sliding of the engagement element (86) above the front surface (660) of the stationary structure (6) until it is reinserted, due to the bias of the spring (9) into the guide groove (662), through said inlet (662E) of the guide groove (662), the further lowering of the auxiliary seat body (7) continuing with the engagement element (86), which slides inside the guide groove (662) until reaching the vertical lowered position of the auxiliary seat body (7).

3. An auxiliary seat according to claim 2, **characterized in that** said outlet (662D) of the guide groove is at least partially obstructed by a free end of an elastic leaf (10) anchored to the stationary structure (6), in such a way that when said engagement element (86) leaves the guide groove through said outlet (662D) it causes the bending deformation of the elastic leaf (10), while when the engagement element (86) slides on said front surface (660) during the lowering of the body of the auxiliary seat (7) towards the vertical inoperative position, it slides over said leaf (10) which, in the meantime, has returned to its undeformed position, so as not to fall back into said outlet (662D).

4. An auxiliary seat according to claim 1, **characterized in that** said spring (9) is arranged in such a way that, in the last tract of the lowering stroke of the auxiliary seat body (7) towards its inoperative vertical position, the spring tends to bias the auxiliary seat body (7) towards this position.

5. A auxiliary seat according to claim 3, **characterized in that** the stationary structure (6) comprises two parallel and spaced apart uprights (66), directed vertically in the condition of use, and said pivoted arm (8) comprises a total of two engagement elements (86) protruding laterally from the lower end (81) of the support arm (8) and engaged in two respective guide grooves (662) which are formed in facing side surfaces of said uprights (66), each groove having a respective receptacle (662B) to support the respective engagement element (86) in the horizontal operative position of the auxiliary seat body (7), and **in that** the front surfaces (660) of said uprights (66) each have said outlet (662D) and said inlet (662E) of the respective guide grooves (662).

6. An auxiliary seat according to claim 1, **characterized in that** the auxiliary seat body (7) is hinged to the stationary structure (6) by means of a hinge device including at least one hinge pin (71), which is freely removable from a hole (660) of a cooperating hinge element by a movement of the auxiliary seat body (7) in the direction of the axis (72) of said pin (71).

7. An auxiliary seat according to claim 1, **characterized in that** the stationary structure (6) comprises a first base element (60) and a second element (63) adjustable in height with respect to the first base element (60), the body of the auxiliary seat (7) being hinged to said second element (63).
